# EUROPEAN PATENT SPECIFICATION

(11) **EP 3 498 403 B1**
(45) Date of publication and mention of the grant of the patent: **24.11.2021**
(21) Application number: 18212244.0
(22) Date of filing: 13.12.2018
(51) Int. Cl.: B22F 10/28, B22F 3/24, B22F 5/00, B22F 5/10, B33Y 80/00, B33Y 10/00, B33Y 40/00, B29C 64/153, B29C 64/35, B22F 10/12, B22F 10/66

(54) **POST-PROCESSING OF ADDITIVE LAYER MANUFACTURED PART**
NACHBEARBEITUNG VON DURCH ADDITIVSCHICHT GEFERTIGTEM TEIL
POST-TRAITEMENT D'UNE PIÈCE FABRIQUÉE PAR VOIE ADDITIVE COUCHE PAR COUCHE

(30) Priority: 14.12.2017 GB 201720886
(43) Date of publication of application: 19.06.2019
(73) Proprietor: Airbus Operations Limited, Bristol BS34 7PA (GB)
(72) Inventor: SCHNEIDER, Stephan, Bristol, BS34 7PA (GB); BUCKLEY, Robert, Bristol, BS34 7PA (GB); NIXON, Andrew, Bristol, BS34 7PA (GB); HEWITT, Stephen, Bristol, BS34 7PA (GB)
(74) Representative: Ribeiro, James Michael

(56) References cited:
- EP-A1- 3 028 839
- EP-A1- 3 219 417
- JP-A- 2013 194 263

## Description

### FIELD OF THE INVENTION

The present invention relates to a blank grown by an additive layer manufacturing process, and a method of producing and post-processing the same.

### BACKGROUND OF THE INVENTION

Additive layer manufacturing (ALM) is a growing technology in the field of engineering due to its ability to easily manufacture complex parts. However, due to the manufacturing process of coalescing particles to form an ALM part, significant post-processing is necessary to remove loose and semi-coalesced material before the manufactured part can be used in a final product.

Post-processing of ALM parts typically requires the use of air hoses and brushes to remove loose material, and metallic tools to remove semi-coalesced material from the ALM part. Air hoses and brushes can only remove loose dust and so metallic tools, such as drill bits, are required to remove semi-coalesced material from the ALM part. The metallic tools need to be accurately located and are unwieldy. Post-processing can be especially difficult where small features are blocked with semi-coalesced material. Small features are typically difficult to access and often require significant amounts of user skill to removed semi-coalesced powder in these regions, which adds to manufacturing process time.

Furthermore, the material of the traditional tools used for the removing semi-coalesced material is typically mismatched from that of the ALM part. Therefore, since one of either the tool or the ALM part is typically harder than the other, the process of removing semi-coalesced material from the ALM part can also cause damage to either the ALM part or the tool.

It is therefore desirable to provide a means for removing semi-coalesced material from an ALM part that is both capable of accessing difficult to reach features and that also minimises any damage to the ALM part and/or the tool during use.

EP3028839 describes a method and a laser sintering device for manufacturing an object. An article is laser sintered, and the article comprises an object component and a tool component, whereby the object component and the tool component are jointly laser sintered. The tool component is laser sintered in a way such that the tool component is adapted for post machining the object component. Thereafter, the object component is post machined using the tool component, wherewith the object is obtained.

### SUMMARY OF THE INVENTION

A first aspect of the invention provides a blank comprising a part, a tool, and a connection member connecting the tool to the part according to claim 1. The part, the tool and the connection member are integrally formed as a single piece of build material. The connection member can be broken or cut to disconnect the tool from the part. After the tool has been disconnected from the part, the tool can be used to mechanically remove surface build material from the surface of the part.

A second aspect of the invention provides a method of manufacturing and post-processing a part according to claim 6, the method comprising growing a blank by an additive layer manufacturing process with a build material, the blank comprising a part, a tool, and a connection member connecting the tool to the part. The part, the tool and the connection member are integrally formed by the additive layer manufacturing process as a single piece of the build material. The connection member is broken or cut to disconnect the tool from the part. After the tool has been disconnected from the part, the tool is used to mechanically remove surface build material from the surface of the part.

Optionally the surface build material is removed from the surface of the part by a scraping, reaming or polishing action.

The tool is used to remove the surface build material mechanically, by motion of the tool, rather than using a non-mechanical method such as blowing air at the part. Typically the tool is used to mechanically remove the surface build material from the surface of the part by bringing the tool into contact with a surface of the part and then moving the tool in contact with the surface of the part, for instance by rotating and/or reciprocating the tool. This motion of the tool mechanically removes the surface build material from the surface of the part, for instance by a scraping, reaming or polishing action.

A computer file may be provided containing instructions for growing a blank according to the first aspect of the invention by a process of additive layer manufacturing. The computer file can be used by an additive layer manufacturing system to grow the blank.

The part has a feature (a hole, channel, passageway, recess or corner) with an interior surface; and the tool is grown inside the feature. Growing the tool inside such a female or inaccessible feature enables the tool to be "bespoke" - in other words of a suitable size and shape to access all areas of the interior surface.

Optionally the blank has a clearance between the tool and the interior surface of the feature, so that no part of the tool is in contact with the interior surface of the feature, at least until the post-processing stage when the tool is used to remove the surface build material. The tool is grown inside the feature with no part of the tool in contact with the interior surface of the feature, which prevents the tool from coalescing to the interior surface during the additive layer manufacturing process.

The tool may be grown entirely within the feature, or more preferably it has a first (or proximal) portion which is grown outside the feature and a second (or distal) portion which is grown inside the feature. The unwanted surface build material is removed from the interior surface of the feature by the second portion of the tool. The first portion protrudes from the feature making it easy to grip with pliers or a similar device.

The tool extends to a tool tip at a distal end of the tool, and the tool tip is inside the feature. The tool tip is brought into contact with the interior surface of the feature, and then the tool tip is used to mechanically remove the surface build material from the interior surface of the feature during the post-processing stage.

Optionally a clearance is provided between the tool tip and the interior surface of the feature, so that the tool tip is not in contact with the interior surface of the feature, at least until the post-processing stage.

Optionally the tool is grown with a clearance between the tool tip and the interior surface of the feature, so that the tool tip is not grown in contact with the interior surface of the feature.

According to the present invention, the connection member is not located within the feature. This makes the connection member more easily accessible to be cut.

Optionally the connection member has a minimum cross-sectional area A1, the tool has a minimum cross-sectional area A2, and the area A1 is less than the area A2. This relatively small cross-sectional area makes the connection member easy to break or cut.

According to the present invention, the part, the tool and the connection member are integrally formed as a single piece of the same build material. The build material may be a metal, a thermosetting polymer, a thermoplastic polymer, or any other suitable build material.

Optionally the surface build material which is mechanically removed by the tool is un-coalesced material (such as loose or un-coalesced powder) and/or semi-coalesced material (such as semi-coalesced powder). In this case, the part may include coalesced material, along with unwanted un-coalesced and/or semi-coalesced material which forms the surface of the part. Alternatively the surface build material which is mechanically removed by the tool may be fully coalesced material, which is removed to polish or otherwise improve a surface finish of the part.

In one embodiment the tool comprises a smooth rod. In other embodiments the tool comprises a shaft with protrusions or recesses on its outer surface, which may be helical or non-helical. These increase the surface area of the shaft and create features which can help to dislodge material.

In a preferred embodiment the tool comprises a shaft with a helical recess on its outer surface. Such a spiral shaft can be rotated to transport the surface material by an auguring action after it has been removed by the tool from the surface of the part. The groove may be formed by helical flutes or threads, for example.

Optionally the blank is grown by forming a series of layers of the build material, for instance in the form of a powder such as a metallic powder or a thermoplastic polymer powder. The build material is selectively coalesced layer-by-layer during the formation of the series of layers so that at least some of the layers have a first area of coalesced build material, a second area of un-coalesced build material, and semi-coalesced build material between the first and second areas. The un-coalesced build material is then removed to leave the coalesced build material and the semi-coalesced material which together constitute the blank. In this case the surface build material removed from the surface of the part by the tool may be semi-coalesced build material.

Alternatively the blank may be grown by selectively curing a liquid build material such as a thermosetting resin. In this case the surface build material removed from the surface of the part by the tool may be semi-cured resin.

Preferably the build material is selectively coalesced by heating, for instance with a laser-beam or electron-beam.

Optionally the tool supports a weight of the part during the additive manufacturing process.

### BRIEF DESCRIPTION OF THE DRAWINGS

Embodiments of the invention will now be described with reference to the accompanying drawings, in which:
Figure 1 is a schematic view of an additive layer manufacturing system;
Figure 2 is a schematic view of a blank according to an embodiment of the present invention;
Figures 3-5 illustrate a method of removing semi-coalesced material from the blank of Figure 2;
Figure 6 is a schematic view of a blank according to an alternative embodiment of the present invention, with a spiral tool;
Figure 7 illustrates a method of removing semi-coalesced material from the blank of Figure 6;
Figure 8 is a schematic view of a blank according to a further alternative embodiment of the present invention, with a corner part;
Figure 9 is a schematic view of a blank according to another alternative embodiment of the present invention, with a curved channel;
Figure 10 is a schematic view of a blank according to another alternative embodiment of the present invention, with multiple tools; and
Figure 11 shows an aircraft.

### DETAILED DESCRIPTION OF EMBODIMENT(S)

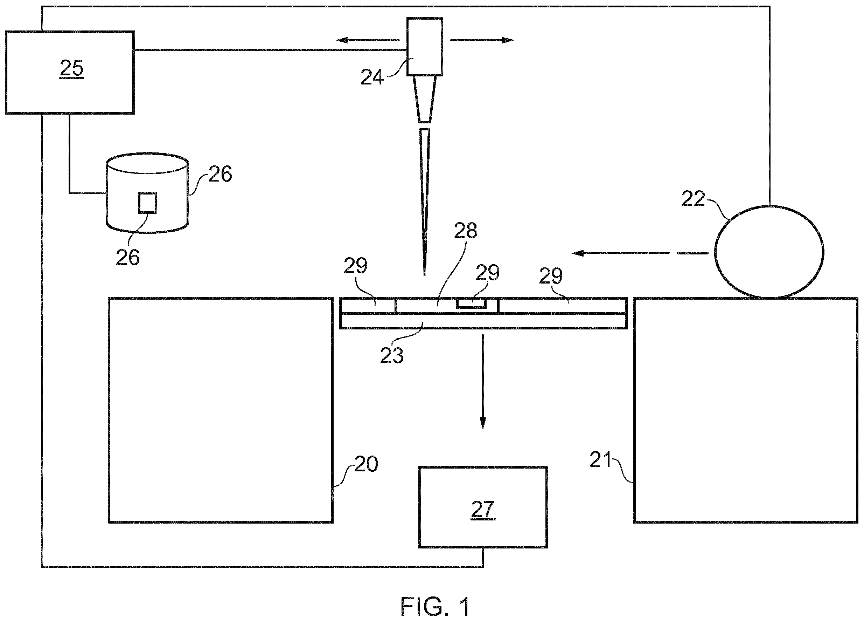

Figure 1 illustrates a powder bed processing additive layer manufacturing (ALM) system for growing a blank. The system is "cold" in that the processing environment is at ambient temperature, and is not maintained at an elevated temperature. The system comprises a pair of feed containers 20, 21 containing metal powder such as Titanium powder. A roller 22 picks up powder from one of the feed containers (in the example of Figure 1, the roller 22 is picking up powder from the right hand feed container 21) and rolls a thin, continuous layer of powder over a substrate 23. In another embodiment (not shown) the layer of powder is spread over the substrate 23 by a rake rather than a roller.

A laser head 24 then scans over the powder layer, and a laser beam from the head is turned on and off to selective coalesce the powder by melting or sintering the powder in a desired pattern. Movement of the laser head 24 and modulation of the laser beam is determined by a Computer Aided Design (CAD) model of the desired profile and layout of the blank. The laser head 24 is controlled by a computer numeric controller (CNC) 25 connected to a memory 26. The memory 26 contains a computer file 26 containing data defining the CAD model for a blank. The CNC 25 is programmed to actuate the laser head 24 so that the laser beam selectively coalesces the desired areas of each respective powder layer as determined by the data in the file 26.

After the initial layer has been selectively coalesced, the CNC 25 commands a substrate actuator 27 to move the substrate 23 down by a small distance (typically of the order of 0.1 mm) to prepare for growth of the next layer. After a pause for the melted powder to solidify, the roller 22 rolls another layer of powder over substrate 23 in preparation for coalescing. Thus as the process proceeds, a first area of coalesced powder 28 is grown, along with a second area of un-coalesced loose powder 29. Semi-coalesced material (not shown) is also formed between the first and second areas 28, 29 when powder becomes slightly heated, but not sufficiently heated to fully coalesce, as the laser beam passes close by. The semi-coalesced powder becomes loosely adhered to the coalesced powder. Both the loose un-coalesced powder 29 and the semi-coalesced powder must be removed from the blank in post-processing.

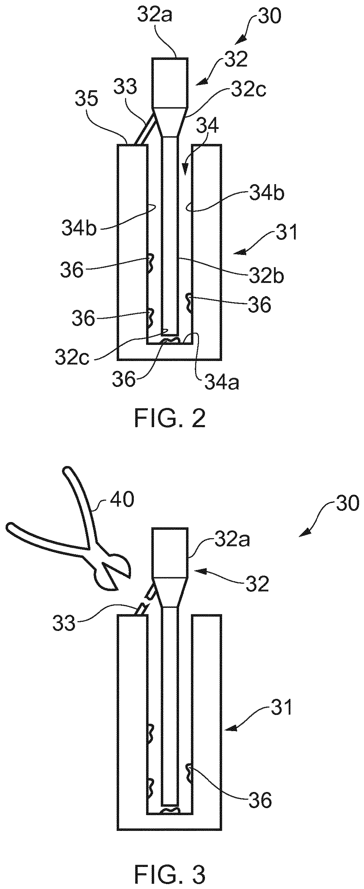

A blank 30 according to an embodiment of the present invention is shown in Figure 2. The blank 30 comprises a part 31 corresponding to the desired final product of the ALM process. The part 31 has an exterior surface 35, and a channel 34 with an interior surface comprising a base 34a and a cylindrical side wall 34b. Initially the channel 34 is filled with loose un-coalesced powder (not shown) which is removed from the channel 34 by inverting the blank 30 (so the un-coalesced powder falls out due to gravity) and/or by blowing compressed air into the channel. Once this loose un-coalesced powder is removed, the interior surface 34a,b of the channel remains coated with semi-coalesced powder 36 which must also be removed.

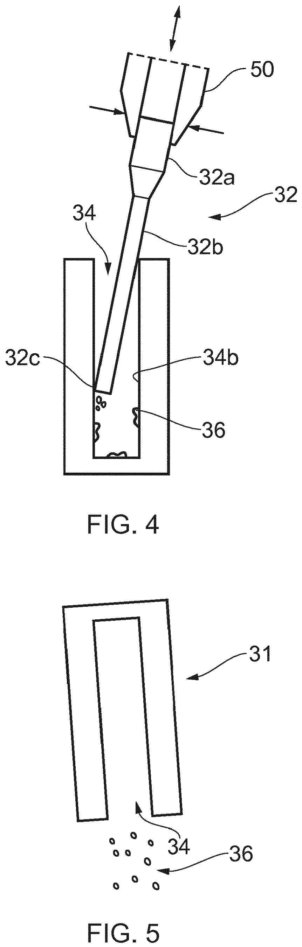

The blank 30 comprises a tool 32 and a connection member 33 which are integrally formed with the part 31 by the ALM process shown in Figure 1. So the part 31, the tool 32 and the connection member 33 are integrally formed as a single piece of the same build material (in this case coalesced Titanium powder). The tool 32 has a proximal portion 32a which is grown outside the channel 34, and a rod 32b which is grown inside the channel and extends to a tool tip 32c at a distal end of the tool. The proximal portion 32a protrudes from the channel making it easy to grip with pliers 50 or a similar device as shown in Figure 4.

The connection member 33 is connected at one end to the external surface 35 of the part 31 outside the channel 34, and at its other end to the protruding proximal portion 32a of the tool 32. The connection member 33 is not located within the channel 34, making it easy to access by a cutting tool 40 as shown in Figure 3.

The blank 30 has a clearance between the rod 32b and the interior surface 34a,b of the channel, so that no part of the tool is grown in contact with the interior surface 34a,b. More specifically, once the un-coalesced powder has been removed then a full clearance is provided between the tool tip 34c and the base 34a of the channel; and full clearance is also provided between the cylindrical side of the rod 32b and the cylindrical side wall 34b of the channel. This full clearance prevents the tool from coalescing to the interior surface 34a,b during the ALM process.

For a channel 34 with a diameter of 3mm, the diameter of the rod 32b is limited to no more than 1 mm, so as to leave at least 1mm clearance on each side.

The proximal portion 32a of the tool 32 typically has a diameter of about 5mm, to enable it to be easily gripped by pliers 50 as shown in Figure 4.

A method of manufacturing and post-processing the blank 30 will now be described with reference to Figures 2-5.

A first build stage involves the manufacture of the blank 30 using an additive layer manufacturing process, such as the one described in Figure 1. The CNC 25 uses only a single computer file, such as the file 26a, containing data defining a CAD model of the entire blank 30, that is: the part 31, the tool 32 and the connection member 33. The use of only a single file 26a for the entire blank 30 helps to reduce build errors, and ensures that the rod 32 is accurately centred and aligned with the channel 34, with full clearance.

In a first post-processing stage, the un-coalesced powder is removed to leave the blank formed from coalesced powder and semi-coalesced powder as shown in Figure 2. This can be done by rotating and agitating the blank, or alternatively a brush or a compressed air hose may be used.

Next the connection member 33 is cut or broken to release the tool 32 from the part 31, in this case by cutting it with hand cutters 40 as shown in Figure 3. Alternatively the connection member 33 may be broken by gripping the tool 32 and twisting it.

The connection member 33 has a minimum cross-sectional area that is significantly smaller than that of the tool 32, to make it easy to cut or break. In this case the connection member 33 has a cylindrical shape with a radius R1 (which is typically of the order of 0.25mm) and cross-sectional area π(R1)²=A1, and the rod 32b has a cylindrical shape with a radius R2 (of the order of 0.5mm to a few cm) and cross-sectional area π(R2)²=A2. The cross-sectional area A1 of the connection member 33 is less than the cross-sectional area A2 of the rod by a factor of about 4-10.

After the tool 32 has been disconnected from the part 31 as shown in Figure 3, the proximal portion 32a of the tool 32 is gripped by pliers 50, or another hand tool, as shown in Figure 4. The edge of the tip 32c of the rod is then brought into contact with the cylindrical side 34b of the channel, and moved by rotating and/or reciprocating the tool pliers 50 to mechanically dislodge the semi-coalesced powder 36, for instance by a scraping or reaming action. Alternatively, the tool 32 may be reciprocated with its axis parallel with the cylindrical side of the channel 34b to mechanically remove the semi-coalesced powder 36 from the surface of the part.

The dislodged semi-coalesced powder is then removed from the channel in the same manner as the un-coalesced powder in the first post-processing stage described above. Figure 5 gives an example - in this case the dislodged semi-coalesced powder 36 is removed by inverting the part 31 along with shaking and tapping the part 31. Finally, the tool 32 may be recycled along with the material removed during post processing.

Since the rod 32b is built within the channel 34, it is able to easily access the full length of the channel that would otherwise be difficult to reach with conventional tooling.

Also, since the tool 32 is created for the bespoke purpose of removing semi-coalesced material from a particular region of a specific part 31, this method also gives the opportunity to design and build specific tooling for a particular job, instead of relying on a select set of available tools, and the tool can be custom built to a specific size, shape and quantity rather than the nominal available sizes provided by a tool manufacturer.

Furthermore, since the tool 32 is integrally formed with the part 31, the tool 32 is formed from the precisely the same build material as the part 31, in this case powdered Titanium. Therefore, the tool 32 is strong enough to remove the semi-coalesced material, but not so strong as to damage the part. This also has the added benefit of enabling the tool to be recycled along with the other waste build material.

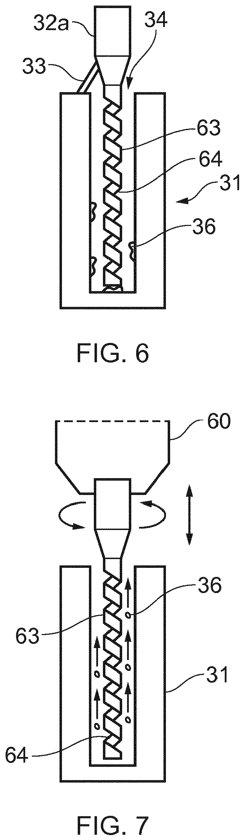

A blank and post-processing method according to an alternative embodiment of the present invention is shown in Figures 6 and 7.

The blank of Figures 6 is similar to the blank 30, and identical features are given the same reference number and will not be described again. In this case the distal portion of the tool is a shaft 63 with a helical external recess 64. The shaft 63 has a maximum diameter, and a minimum diameter coinciding with the recess 64.

The maximum diameter of the shaft 63 is wider than the diameter of the cylindrical rod 32b, the maximum diameter of the shaft 63 typically being about 2mm for a 3mm diameter channel 34 leaving a reduced clearance of about 0.5mm rather than 1mm. This reduced clearance is acceptable, since the recess 64 results in a reduced surface area which could potentially adhere to the part.

The tool of Figure 6 is used in a similar way to the tool of Figure 4, but it is also rotated within the channel by a tool 60 (or by twisting it between a pair of fingers) as shown in Figure 7. This rotation has two functions: firstly the outer diameter of the shaft and the tip of the shaft 63 contact the part, and the rotation dislodges the semi-coalesced powder; and secondly the rotating helical recess 64 removes the dislodged semi-coalesced powder 36 from the channel by an auguring action indicated by vertical arrows in Figure 7. The edges of the recess 64 can also dislodge the semi-coalesced powder 36 by a scraping action.

In the embodiments of Figures 2 to 7, the channel 34 is a "blind hole", meaning that it does not extend through the entirety of the part 31. The tool is sufficiently long that the tool tip 32c can be brought into contact with the base 34a of the channel 34 after the tool has been disconnected from the part. This enables the tool to access the full length of the channel 34 and remove surface build material from its base 34a by either a scraping, reaming or auguring action.

The smooth cylindrical rod 32b potentially compresses powder at the bottom of the channel, but the spiral shaft 63 of Figure 7 picks up such powder at the bottom of the channel and removes it by the auguring action.

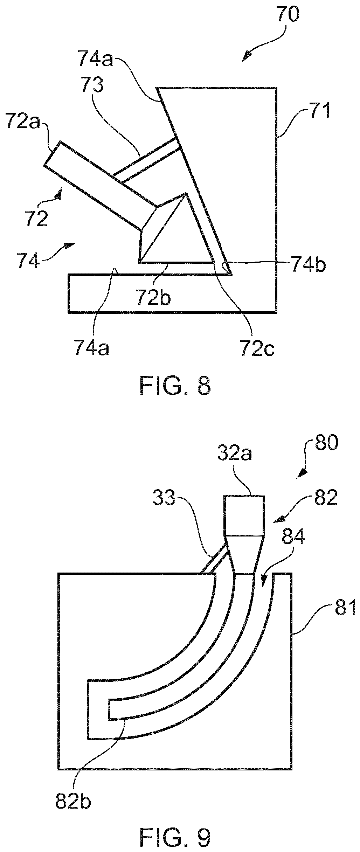

A variety of other blanks are illustrated in Figures 8-10.

Figure 8 shows a blank 70 with a part 71, a tool 72 and a connection member 73. The part 71 has a recess 74 with an interior surface formed by a pair of walls 74a which meet at a sharp internal corner 74b.

The tool 72 has a cylindrical shaft 72a and an enlarged conical or wedge-shaped distal portion 72b which tapers to a sharp tip 72c. The distal portion 72b is grown within the feature 74, with the angle of taper of the distal portion 72b matching the angle of the walls 74a so the sharp tip 72c can fit into the sharp corner 74b to remove semi-coalesced powder.

The connection member 33 of Figure 2 is located outside the channel 34, but the connection member 73 of Figure 8 is located within the recess 74 and joined at each end to the walls 74a.

Figure 9 shows a blank 80 which is similar to the blank 30, and identical features are given the same reference number and will not be described again.

In this case the tool 82 has a curved rod 82b which is grown within a curved channel 84. The rod 82b and the channel 84 have the same curvature so that the clearance remains constant along the length of the curved rod. The curved rod 82b is moved with a reciprocating motion with substantially no rotation to dislodge the semi-coalesced powder.

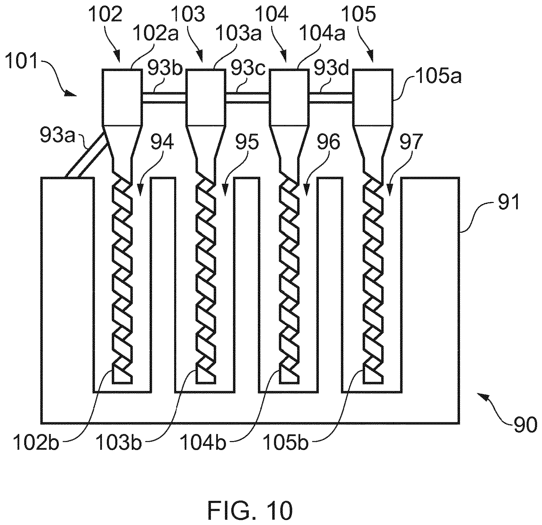

Figure 10 shows a blank 90 having a part 91 with four channels 94,95,96,97, and a tool assembly 101 with four tools 102,103,104,105. The tool assembly 101 is attached to the part 91 by a connection member 93a, and the four tools 102-105 are attached to each other by three linking members 93b,93c,93d. The part 91, tools 102-105, connection member 93a and linking members 93b-d are integrally formed as a single piece of build material.

Each tool 102-105 has a proximal portion 102a,103a,104a,105a and a spiral shaft 102b,103b,104b,105b with a helical recess on its outer surface. Each shaft 102b-105b is grown within a respective one of the channels 94-97.

During post-processing, the connection member 93a is cut to release the tool assembly 101 from the part 91, then the linking members 93b-d are cut or broken to separate the tools 102-105 from each other before they are used to clear semi-coalesced powder from the channels 94-97.

Although each of the shafts 102b-105b illustrated in Figure 10 are formed with helical recesses on their outer surface, they may be smooth cylindrical rods. In this case they can be reciprocated together to dislodge the semi-coalesced powder from the channels 94-97 without having to first break the linking members 93b-d.

In the embodiments described above, the shaft of the (or each) tool has an outer surface which is either smooth and cylindrical, or formed with a helical recess which provides an auguring action as well as creating features (such as the edge of the recess) which can help dislodge material, for instance by a scraping action. In other embodiments, the shaft of the tool may be formed with non-helical recesses (such as circular pits or annular grooves) or protrusions (such as raised bumps, hoops or axial ridges) on its outer surface. Although these recess or protrusions do not provide an auguring action, they do increase the surface area of the shaft and create features which can help dislodge material.

In the embodiments described above, the blank is formed by a so-called "powder-bed" ALM process shown in Figure 1, with a powdered build material. In an alternative embodiment of the invention, the blank may instead be grown from a liquid build material such as a thermosetting resin. In this case, the blank is grown on a substrate in a bath of the liquid build material. The substrate is immersed just below the liquid surface so there is a thin liquid layer above the substrate which is heated by a laser-beam or other heater to selectively cure the liquid. The substrate is then moved down slightly and another layer of liquid formed on top of the partially cured first layer. The process continues in a layer-by-layer fashion to build the blank. In this case the surface build material removed from the surface of the part by the tool will be semi-cured resin.

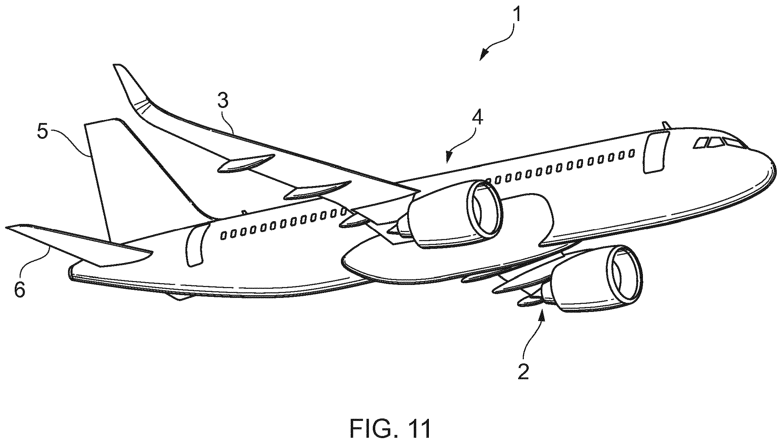

The blanks shown in Figures 2-10 may have a variety of applications, but one preferred application is to form part of the airframe of an aircraft. Figure 11 shows an aircraft 1 with an airframe comprising wings 2, 3 joined to a fuselage 4, a vertical stabiliser 5 and a pair of horizontal stabilisers 6. Various elements of the airframe 2-6 may be formed from a blank according to the present invention. In one example the fuselage may have a frame structure with nodes adhesively bonded to tubes, and the nodes are formed with channels for injecting adhesive to the bonding surface. Such nodes may be formed from a blank according to the present invention.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A blank comprising a part (31); a tool (32); and a connection member (33) connecting the tool to the part; wherein the part, the tool and the connection member are integrally formed as a single piece of build material, the connection member can be broken or cut to disconnect the tool from the part, and after the tool has been disconnected from the part, the tool can be used to mechanically remove surface build material from the surface of the part; wherein the part has a feature (34) with an interior surface (34a, 34b), the feature being a hole, channel, passageway, recess or corner; the tool is inside the feature; the tool extends to a tool tip (32c) at a distal end of the tool, the tool tip is inside the feature and the connection member is not located within the feature.

2. A blank according to claim 1, comprising a clearance between the tool (32) and the interior surface (34a, 34b) of the feature (34), so that no part of the tool is in contact with the interior surface of the feature.

3. A blank according to claim 1, wherein the tool (32) has a first portion (32a) outside the feature (34) and a second portion (32b) inside the feature.

4. A blank according to any preceding claim comprising a clearance between the tool tip (32c) and the interior surface (34a, 34b) of the feature (34), so that the tool tip is not in contact with the interior surface of the feature.

5. A blank according to any preceding claim, wherein the feature (34) is a blind hole, the interior surface comprises a base (34a) and a sidewall (34b), and the tool (32) is sufficiently long that the tool tip (32c) can be brought into contact with the base of the blind hole after the tool has been disconnected from the part.

6. A method of manufacturing and post-processing a part, the method comprising:
growing a blank by an additive layer manufacturing process with a build material, the blank comprising a part (31), a tool (32), and a connection member (33) connecting the tool to the part, wherein the part, the tool and the connection member are integrally formed by the additive layer manufacturing process as a single piece of the build material;
breaking or cutting the connection member to disconnect the tool from the part;
and
after the tool has been disconnected from the part, using the tool to mechanically remove surface build material from the surface of the part, wherein:
the part has a feature (34) with an interior surface (34a, 34b), the feature being a hole, channel, passageway, recess or corner;
the tool is grown inside the feature;
the surface build material is removed from the interior surface of the feature by the tool;
the tool extends to a tool tip (32c) at a distal end of the tool;
the tool tip is grown inside the feature;
the connection member (33) is not located within the feature; and
the tool tip is moved into contact with the interior surface of the feature to remove the surface build material from the interior surface of the feature.

7. A method of manufacturing and post-processing a part according to claim 6, wherein the tool (32) is grown with a clearance between the tool and the interior surface (34a, 34b) of the feature (34), so that no part of the tool is grown in contact with the interior surface of the feature.

8. A method of manufacturing and post-processing a part according to claim 6 or 7, wherein the tool (32) has a first portion (32a) which is grown outside the feature (34) and a second portion (32b) which is grown inside the feature, and the surface build material is removed from the interior surface of the feature by the second portion of the tool.

9. A method of manufacturing and post-processing a part according to any of claims 6 to 8, wherein the surface build material is mechanically removed from the surface of the part by moving the tool (32), for instance by rotating and/or reciprocating the tool.

10. A method of manufacturing and post-processing a part according to any of claims 6 to 9, wherein the tool (32) comprises a shaft (63) with a helical recess (64) on its outer surface which is rotated to transport the surface build material by an auguring action after the surface build material has been removed by the tool from the surface of the part.

11. A method of manufacturing and post-processing a part according to any of claims 6 to 10, wherein the blank is grown by forming a series of layers of the build material; selectively coalescing the build material layer-by-layer during the formation of the series of layers so that at least some of the layers have a first area of coalesced build material (28), a second area of un-coalesced build material (29), and semi-coalesced build material (36) between the first and second areas; and removing the un-coalesced build material to leave the coalesced build material and the semi-coalesced material which together constitute the blank; and
wherein the surface build material removed from the surface of the part by the tool is semi-coalesced build material.

12. A method of manufacturing and post-processing a part according to claim 11, wherein the build material is in the form of a powder.

13. A method according to any of claims 6 to 12, wherein the feature (34) is a blind hole, the interior surface comprises a base (34a) and a sidewall (34b), and the surface build material is removed from the base of the blind hole by the tool.

## Patentansprüche

1. Rohling, umfassend ein Teil (31), ein Werkzeug (32) und ein Verbindungselement (33), welches das Werkzeug mit dem Teil verbindet, wobei das Teil, das Werkzeug und das Verbindungselement integral als ein Werkstoff-Einzelstück ausgebildet sind, das Verbindungselement gebrochen oder beschnitten werden kann, um das Werkzeug vom Teil abzutrennen, und das Werkzeug, nachdem das Werkzeug vom Teil abgetrennt worden ist, verwendet werden kann, um Oberflächenwerkstoff von der Oberfläche des Teils mechanisch zu entfernen, wobei das Teil ein Merkmal (34) mit einer inneren Oberfläche (34a, 34b) aufweist, das Merkmal ein Loch, ein Kanal, ein Durchgang, eine Vertiefung oder eine Ecke ist, sich das Werkzeug innerhalb des Merkmals befindet, sich das Werkzeug zu einer Werkzeugspitze (32c) an einem fernen Ende des Werkzeugs erstreckt, sich die Werkzeugspitze innerhalb des Merkmals befindet und das Verbindungselement nicht innerhalb des Merkmals angeordnet ist.

2. Rohling nach Anspruch 1, umfassend einen Zwischenraum zwischen dem Werkzeug (32) und der inneren Oberfläche (34a, 34b) des Merkmals (34), so dass sich kein Teil des Werkzeugs in Kontakt mit der inneren Oberfläche des Merkmals befindet.

3. Rohling nach Anspruch 1, wobei das Werkzeug (32) einen ersten Abschnitt (32a) außerhalb des Merkmals (34) und einen zweiten Abschnitt (32b) innerhalb des Merkmals aufweist.

4. Rohling nach einem der vorherigen Ansprüche, umfassend einen Zwischenraum zwischen der Werkzeugspitze (32c) und der inneren Oberfläche (34a, 34b) des Merkmals (34), so dass sich kein Teil der Werkzeugspitze in Kontakt mit der inneren Oberfläche des Merkmals befindet.

5. Rohling nach einem der vorherigen Ansprüche, wobei das Merkmal (34) ein Sackloch ist, die innere Oberfläche eine Basis (34a) und Seitenwand (34b) aufweist und das Werkzeug (32) ausreichend lang ist, dass die Werkzeugspitze (32c) in Kontakt mit der Basis des Sacklochs gebracht werden kann, nachdem das Werkzeug vom Teil abgetrennt worden ist.

6. Verfahren zur Herstellung und Nachbearbeitung eines Teils, das Verfahren umfassend:
Ausbilden eines Rohlings durch ein additives Fertigungsverfahren mit einem Werkstoff, der Rohling umfassend ein Teil (31), ein Werkzeug (32) und ein Verbindungselement (33), welches das Werkzeug mit dem Teil verbindet, wobei das Teil, das Werkzeug und das Verbindungselement durch das additive Fertigungsverfahren integral als ein Einzelstück des Werkstoffs ausgebildet sind,
Brechen oder Schneiden des Verbindungselements, um das Werkzeug vom Teil abzutrennen, und
Verwenden des Werkzeugs, nachdem das Werkzeug vom Teil abgetrennt worden ist, um Oberflächenwerkstoff von der Oberfläche des Teils mechanisch zu entfernen, wobei:
das Teil ein Merkmal (34) mit einer inneren Oberfläche (34a, 34b) aufweist, das Merkmal ein Loch, ein Kanal, ein Durchgang, eine Vertiefung oder eine Ecke ist,
das Werkzeug innerhalb des Merkmals ausgebildet wird,
der Oberflächenwerkstoff von der inneren Oberfläche des Merkmals durch das Werkzeug entfernt wird,
sich das Werkzeug zu einer Werkzeugspitze (32c) an einem fernen Ende des Werkzeugs erstreckt,
die Werkzeugspitze innerhalb des Merkmals ausgebildet wird,
das Verbindungselement (33) nicht innerhalb des Merkmals angeordnet ist und
die Werkzeugspitze in Kontakt mit der inneren Oberfläche des Merkmals bewegt wird, um den Oberflächenwerkstoff von der inneren Oberfläche des Merkmals zu entfernen.

7. Verfahren zur Herstellung und Nachbearbeitung eines Teils nach Anspruch 6, wobei das Werkzeug (32) mit einem Zwischenraum zwischen dem Werkzeug und der inneren Oberfläche (34a, 34b) des Merkmals (34) ausgebildet wird, so dass kein Teil des Werkzeugs in Kontakt mit der inneren Oberfläche des Merkmals ausgebildet wird.

8. Verfahren zur Herstellung und Nachbearbeitung eines Teils nach Anspruch 6 oder 7, wobei das Werkzeug (32) einen ersten Abschnitt (32a), der außerhalb des Merkmals (34) ausgebildet wird, und einen zweiten Abschnitt (32b), der innerhalb des Merkmals ausgebildet wird, aufweist und der Oberflächenwerkstoff von der inneren Oberfläche des Merkmals durch den zweiten Abschnitt des Werkzeugs entfernt wird.

9. Verfahren zur Herstellung und Nachbearbeitung eines Teils nach einem der Ansprüche 6 bis 8, wobei der Oberflächenwerkstoff mechanisch von der Oberfläche des Teils durch Bewegen des Werkzeugs (32) entfernt wird, beispielsweise durch Drehen und/oder Hin- und Herbewegen des Werkzeugs.

10. Verfahren zur Herstellung und Nachbearbeitung eines Teils nach einem der Ansprüche 6 bis 9, wobei das Werkzeug (32) einen Schaft (63) mit einer helikalen Vertiefung (64) an seiner äußeren Oberfläche umfasst, welcher gedreht wird, um den Oberflächenwerkstoff durch eine Hebewirkung zu befördern, nachdem der Oberflächenwerkstoff durch das Werkzeug von der Oberfläche des Teils entfernt wurde.

11. Verfahren zur Herstellung und Nachbearbeitung eines Teils nach einem der Ansprüche 6 bis 10, wobei der Rohling durch Ausbilden einer Vielzahl von Schichtenfolgen ausgebildet wird, den Werkstoff während der Bildung der Schichtenfolgen Schicht um Schicht selektiv vereinigend, so dass wenigstens einige der Schichten einen ersten Bereich von vereinigtem Werkstoff (28) aufweisen, einen zweiten Bereich von nicht-vereinigtem Werkstoff (29) und halbvereinigten Werkstoff (36) zwischen dem ersten und dem zweiten Bereich aufweisen, und der nicht-vereinigte Werkstoff entfernt wird, um den vereinigten Werkstoff und den halbvereinigten Werkstoff zurückzulassen, welche zusammen den Rohling bilden, und
wobei der durch das Werkzeug von der Oberfläche des Teils entfernte Oberflächenwerkstoff halbvereinigter Werkstoff ist.

12. Verfahren zur Herstellung und Nachbearbeitung eines Teils nach Anspruch 11, wobei der Werkstoff in der Form eines Pulvers vorliegt.

13. Verfahren nach einem der Ansprüche 6 bis 12, wobei das Merkmal (34) ein Sackloch ist, die innere Oberfläche eine Basis (34a) und Seitenwand (34b) aufweist und der Oberflächenwerkstoff von der Basis des Sacklochs durch das Werkzeug entfernt wird.

## Revendications

1. Une ébauche comprenant une pièce (31), un outil (32) et un organe de connexion (33) reliant l'outil à la pièce, la pièce, l'outil et l'organe de connexion étant formés intégralement comme une pièce d'un seul tenant dans un matériau de construction, l'organe de connexion pouvant être brisé ou coupé pour déconnecter l'outil de la pièce et une fois que l'outil a été déconnecté de la pièce, il peut être utilisé pour enlever mécaniquement du matériau de construction de surface de la surface de la pièce, la pièce possédant un dispositif (34) avec une surface intérieure (34a, 34b), le dispositif étant un orifice, un canal, un passage, un évidement ou un angle, l'outil étant à l'intérieur du dispositif, l'outil s'étendant jusqu'à un embout d'outil (32c) à une extrémité distale de l'outil, l'embout d'outil étant à l'intérieur du dispositif et l'organe de connexion n'étant pas situé à l'intérieur du dispositif.

2. Ebauche suivant la revendication 1 comprenant un espace entre l'outil (32) et la surface intérieure (34a, 34b) du dispositif (34) de sorte qu'aucune partie de l'outil est en contact avec la surface intérieure du dispositif.

3. Ebauche suivant la revendication 1, dans lequel l'outil (32) présente une première partie (32a) à l'extérieur du dispositif (34) et une seconde partie (32b) à l'intérieur du dispositif.

4. Ebauche suivant une des revendications précédentes comprenant un espace entre l'embout d'outil (32c) et la surface intérieure (34a, 34b) du dispositif (34) de sorte que l'embout d'outil n'est pas en contact avec la surface intérieure du dispositif.

5. Ebauche suivant une des revendications précédentes, dans lequel le dispositif (34) est un orifice aveugle, la surface intérieure comprend une base (34a) et une paroi latérale (34b), et l'outil (32) est suffisamment long pour que l'embout d'outil (32c) peut être mis en contact avec la base de l'orifice aveugle une fois que l'outil a été déconnecté de la partie.

6. Procédé de fabrication et post-traitement d'une pièce, le procédé comprenant :
faire croître une ébauche au moyen un processus de fabrication de couche additive avec un matériau de construction, l'ébauche comprenant une pièce (31), un outil (32) et un organe de connexion (33) reliant l'outil à la pièce, la pièce, l'outil et l'organe de connexion étant intégralement formé au moyen d'un processus de fabrication de couche additive comme une seule pièce du matériau de construction,
briser ou couper l'organe de connexion pour déconnecter l'outil de la pièce, et
une fois que l'outil a été déconnecté de la pièce, utiliser l'outil pour enlever mécaniquement du matériau de construction de surface de la surface de la pièce,
la pièce présentant un dispositif (34) avec une surface intérieure (34a, 34b), le dispositif étant un trou, un canal, un passage, un évidement ou un angle,
on fait croître l'outil à l'intérieur du dispositif,
le matériau de construction de surface est enlevé de la surface intérieure du dispositif au moyen de l'outil,
l'outil s'étend jusqu'à un embout d'outil (32c) à une extrémité distale de l'outil,
on fait croître l'embout d'outil à l'intérieur du dispositif,
l'organe de connexion (33) n'est pas situé à l'intérieur du dispositif, et
l'embout d'outil est mis en contact avec la surface intérieure du dispositif pour enlever le matériau de construction de surface de la surface intérieure du dispositif.

7. Procédé de fabrication et de post-traitement d'une pièce suivant la revendication 6, dans lequel on fait croître l'outil (32) avec un espace entre l'outil et la surface intérieure (34a, 34b) du dispositif (34) de sorte que l'on ne fait croître aucune partie de l'outil en contact avec la surface intérieure du dispositif.

8. Procédé de fabrication et de post-traitement d'une pièce suivant la revendication 6 ou 7, dans lequel l'outil (32) présente une première partie (32a) que l'on fait croître à l'extérieur du dispositif (34) et une seconde partie (32b) que l'on fait croître à l'intérieur du dispositif, et le matériau de construction de surface est enlevé de la surface intérieure du dispositif au moyen de la seconde partie de l'outil.

9. Procédé de fabrication et de post-traitement d'une pièce suivant une des revendications 6 à 8, dans lequel le matériau de construction de surface est enlevé mécaniquement de la surface de la pièce en déplaçant l'outil (32), par exemple en faisant tourner ou exécuter un mouvement de va et vient à l'outil.

10. Procédé de fabrication et de post-traitement d'une pièce suivant une des revendications 6 à 9, dans lequel l'outil (32) comprend un arbre (63) avec un évidement hélicoïdal (64) sur sa surface extérieure que l'on fait tourner pour transporter le matériau de construction de surface par une opération de présage¹ après que le matériau de construction de surface a été enlevé de la surface de la pièce au moyen de l'outil.

11. Procédé de fabrication et de post-traitement d'une pièce suivant une des revendications 6 à 10, dans lequel on fait croître l'ébauche en formant une série de couches du matériau de construction, en faisant coalescer sélectivement le matériau de construction couche par couche durant la formation de la série de couches de sorte qu'au moins quelques-unes des couches possédant une première zone de matériau de construction coalescé (28), une seconde zone de matériau de construction non coalescé (29) et un matériau de construction semi-coalescé (36) entre la première et la seconde zone, et on enlève le matériau de construction non-coalescé pour laisser le matériau de construction coalescé et le matériau semi-coalescé qui, ensemble, constituent l'ébauche, et
dans lequel le matériau de construction de surface enlevé de la surface de la pièce au moyen de l'outil est un matériau de construction semi-coalescé.

12. Procédé de fabrication et de post-traitement d'une pièce suivant la revendication 11, dans lequel le matériau de construction est sous la forme d'une poudre.

13. Procédé suivant une des revendications 6 à 12, dans lequel le dispositif (34) est un orifice aveugle, la surface intérieure comprend une base (34a) et une paroi latérale (34b) et le matériau de construction de surface est enlevé de la base de l'orifice aveugle au moyen de l'outil.
